# EUROPÄISCHE PATENTSCHRIFT

(11) **EP 3 235 916 B1**
(45) Veröffentlichungstag und Bekanntmachung des Hinweises auf die Patenterteilung: **15.08.2018**
(21) Anmeldenummer: 16165976.8
(22) Anmeldetag: 19.04.2016
(51) Int. Cl.: C22C 21/00, C22F 1/043

(54) **GUSSLEGIERUNG**
CAST ALLOY
ALLIAGE DE MOULAGE

(43) Veröffentlichungstag der Anmeldung: 25.10.2017
(73) Patentinhaber: Rheinfelden Alloys GmbH & Co. KG, 79618 Rheinfelden (DE)
(72) Erfinder: WIESNER, Stuart, 4310 Rheinfelden (CH)
(74) Vertreter: Rentsch Partner AG

(56) Entgegenhaltungen:
- CN-A- 104 299 675
- KR-A- 20130 083 183
- W. Hufnagel: "Key to Aluminium Alloys 4th Edition", 1. Januar 1991 (1991-01-01), Aluminium-Verlag, Germany, XP002761852, ISBN: 3-87017-218-5 Seiten 78-79, * Seite 78 - Seite 79 *

## Beschreibung

### TECHNISCHES GEBIET

Die Erfindung betrifft eine Gusslegierung auf der Basis von Aluminium, Magnesium und Eisen, insbesondere für den Einsatz in Fahrzeug-Strukturbauteilen.

### STAND DER TECHNIK

Legierungen des Typs AlFe sind allgemein bekannt und werden gemäss einigen Literaturstellen zu den sogenannten 8000er-Legierungen, einer Legierungsgruppe der Aluminiumknetlegierungen, gezählt. Zudem sprechen zahlreiche Veröffentlichungen über intermetallische AlFe-Werkstoffe, auch Eisen-Aluminide genannt, die einen hohen Eisengehalt und weitere Legierungselemente aufweisen. Bei diesen Werkstoffen handelt es sich nicht um Gusswerkstoffe. Sie werden in der Pulvermetallurgie (z.B. zur Oberflächenbeschichtung), bei Sinterprozessen, in 3D-Druckverfahren oder ähnlichem eingesetzt. Je nach Anwendungsfall werden Eigenschaften wie Magnetisierbarkeit, Warmfestigkeit oder hohe Korrosionsbeständigkeit genannt.

Die Patentliteratur im Bereich AlFe-Legierungen weist auf den Einsatz dieser Legierung für Bleche, Extrusionsprodukte, Beschichtungstechnik und die Anwendung dieser Legierung in Pulverprodukten. Stellvertretend für eine Vielzahl von Patentpublikation im Bereich Knetlegierungsprodukte, seien an dieser Stelle die US8206519 B2, US7462410 B2, US20060213590 A1, und die DE60320387 T2 genannt. Ein weiteres Einsatzgebiet für AlFe-Legierungen sind magnetische Bauteile, welche zur Informationsspeicherung dienen. In den genannten Anwendungsgebieten spielt weder die Giessbarkeit noch die Beeinflussung von Werkstoffkennwerten über die selektive Zugabe von Legierungselementen eine Rolle.

Im Bereich Gusslegierungen, insbesondere bei Druckgusslegierungen kommen primär die Legierungssysteme Al-Si und Al-Mg-Si zum Einsatz. Die Anmelderin selbst ist seit vielen Jahren im Bereich der Entwicklung von Druckgusslegierungen für den Automobilbau tätig. Stellvertretend für eine entsprechende Anzahl von bereits erteilten Patenten, sei an dieser Stelle die EP14431 22B1 und EP1612286B1 genannt. Beide Schutzrechte beziehen sich auf eine AlSi9Mn-Legierung für Strukturbauteile und weisen bereits im Gusszustand gute Werkstoffkennwerte auf.

Der Leichtbau der Automobilindustrie fordert einfache, robuste Herstellungsprozesse. Im Falle von Strukturbauteilen bedeutet das unter anderem ein Verzicht auf Wärmebehandlungen. Auf diese Weise wird nicht nur ein Herstellungsprozessschritt eingespart, sondern auch Richtarbeiten, welche infolge des nicht zu vermeidenden Verzugs in der Regel auszuführen sind. Es wird des Weiteren gefordert, einen Oberflächenbehandlungsprozess bei Temperaturen von 190 °C und mehr durchführen zu können, ohne dass eine Wirkung auf die Werkstoffkennwerte der Legierung eintritt. Weitere Forderungen bestehen in einer Legierung mit einfacher Verarbeitbarkeit, dazu zählen eine einfache Schmelzbarkeit, eine geringe Klebeneigung beim Gießen oder eine simple Handhabung des Rücklaufmaterials. Neben einfachen Herstellungsprozessen spielen Legierungskosten eine große Rolle. Hier besteht ein Wunsch nach einer Legierung, die keine kostspieligen Legierungselemente enthält. Ferner soll die Möglichkeit bestehen, Sekundärrohstoffe, beispielsweise Sekundäraluminium einzusetzen, da auf diese Weise Ressourcen entsprechend geschont werden können.

Ferner sei an dieser Stelle ebenfalls die WO 96/15281 der Anmelderin selbst zu erwähnen. Dieses Dokument offenbart eine Aluminium-Gusslegierung mit 3,0 bis 6,0 Gew.-% Magnesium; 1,4 bis 3,5 Gew.-% Silizium; 0,5 bis 2,0 Gew.-% Mangan; max. 0,15 Gew.-% Eisen; max. 0,2 Gew.-% Titan, sowie Aluminium als Rest und weitere Verunreinigungen einzeln max. 0,02 Gew.-%, insgesamt max. 0,2 Gew.-%. Die Aluminium-Gusslegierung eignet sich insbesondere für Druckguss sowie Thixocasting bzw. Thixoschmieden. Eine besondere Verwendung liegt im Druckguss für Bauteile mit hohen Anforderungen an die mechanischen Eigenschaften, da diese bereits im Gusszustand vorliegen und somit eine weitere Wärmebehandlung nicht erforderlich ist.

### DARSTELLUNG DER ERFINDUNG

Aufgabe der vorliegenden Erfindung ist es eine Gusslegierung auf Basis von Aluminium-Magnesium-Eisen zur Verfügung zu stellen, welche mindestens eine der vorgängig genannten Anforderungen erfüllt.

Erfindungsgemäss wird diese Aufgabe gelöst, durch folgende Gusslegierung:

| | |
|---|---|
| Eisen | 0,8 - 3.0 |
| Magnesium | 2,0 bis 7,0 Gew. % |
| Mangan | 0 - 2,5 Gew. % |
| Beryllium | 0 - 500 ppm |
| Titan | 0 - 0,5 Gew. % |
| Silizium | 0-0,4% |
| Strontium | 0 - 0,8 Gew. % |
| Phosphor | 0 - 500 ppm |
| Kupfer | 0 - 4 Gew. % |
| Zink | 0 - 10 Gew. % |

0- 0,5 Gew. % eines Elements oder einer Elementengruppe ausgewählt aus der Gruppe bestehend aus Chrom, Nickel, Molybdän, Zirkon, Vanadium, Hafnium, Calcium, Gallium und Bor, und der Rest Aluminium und unvermeidbare Verunreinigungen.

Bevorzugte Ausführungsarten der Erfindung sind in den abhängigen Ansprüchen angegeben.

In einer Ausführungsvariante liegt der Eisengehalt der Gusslegierung zwischen 1,0 - 2,4 Gew.-% Eisen.

In einer weiteren Ausführungsform liegt der Eisengehalt der Gusslegierung zwischen 1,4 - 2,2 Gew.-% Eisen.

In einer weiteren Ausführungsform liegt der Magnesiumgehalt der Gusslegierung zwischen 3,0- 5,0 Gew.-% Magnesium.

In einer Ausführungsform liegt der Mangangehalt zwischen 0-0,6 Gew.-%.

In einer Ausführungsform liegt der Berylliumgehalt zwischen 0-100 ppm.

In einer Ausführungsform liegt der Strontiumgehalt zwischen 0-0,03 Gew. % .

In einer Ausführungsform liegt der Zinkgehalt zwischen 0-0,5 Gew. %.

In einer Ausführungsform liegt der Phosphorgehalt zwischen 0-50 ppm.

In einer Ausführungsform liegt der Kupfergehalt zwischen 0-0,2 Gew. % Kupfer.

In einer Ausführungsform liegt der Titangehalt zwischen 0-0,1 Gew. %.

Bevorzugt wird die erfindungsgemässe Legierung zum Druckgiessen verwendet, insbesondere zum Druckgiessen von Strukturbauteilen für den Automobilbau.

Ist im Folgenden von einer Gusslegierung die Rede, umfasst dies eine Legierung, insbesondere für Druckguss, Kokillenguss oder Sandguss.

Die erfindungsgemässe Legierung beruht auf einem Legierungssystem AlFe, welches bisher nicht in Gusslegierungen für den Automobilbau eingesetzt wurde. Dieses System ist gleichfalls duktil und kann durch Magnesium verfestigt werden, ohne dass trinäre Phasen AlMgFe entstehen. Für die erfindungsgemässe Legierung wird das Al-Al₃Fe-Eutektikum verwendet, wodurch diese Legierung gut gießbar wird. Das Al₃Fe-Eutektikum weist eine bekannte anormale Struktur auf. In der Literatur wird ebenfalls seine Erstarrungsmorphologie beschrieben.

Ohne zusätzliche Elemente, ausser den Basiselementen Aluminium, Eisen und Magnesium, können mit der erfindungsgemässen Legierung Dehngrenzen von 70 MPa bei Bruchdehnungen von 20 % und einem Biegewinkel, nach Daimler-Vorschrift DBL 4918, von 90° erzielt werden. Die Zusammensetzung zeichnet sich ebenfalls durch eine hohe elektrische und thermische Leitfähigkeit aus.

Aus dem AlMgFe-Phasendiagramm ist ableitbar, dass bei einem Magnesium-Gehalt von 0- 9 Gew % und einem Eisen-Gehalt von 0-3 Gew % eine Al₃Fe-Phase entsteht. Ferner ist bekannt, dass sich zudem eine Mg₅Al₈-Phase bildet, die meist als Al₃Mg₂ bezeichnet wird. Diese Phase tritt ab einem höheren Mg-Gehalt auf. Die Löslichkeit von Magnesium in Aluminium ist ab 327 °C hoch genug, um über 7 Gew. % Magnesium zu lösen. Damit ist das Entstehen einer Magnesium-haltigen Phase bei der erfindungsgemässen Legierung nicht zu erwarten. Es ist bekannt, dass bei binären AlMg-Legierungen bis zu einem Gehalt von 7 % Mg keine nennenswerte Ausscheidungshärtung erreicht wird, was gleichfalls in den vorliegenden Untersuchungen bestätigt werden konnte. Das AlMg-Eutektikum liegt bei ca. 35 % Mg-Anteil und spielt in der erfindungsgemäßen Legierung keine Rolle. Eine ternäre Phase AlMgFe ist nicht zu erwarten.

Das Verhältnis von Eisen wird so gewählt, dass ausreichend Eutektikum Al-Al₃Fe vorhanden ist und feine, intermetallische Phasen gebildet werden. Magnesium wird zugegeben um die gewünschte Festigkeit einzustellen.

In der Literatur wird auf eine schwindungsreduzierende Wirkung des Eisens hingewiesen. Zudem entstehe bei 0,4 Gew % Si-haltigen Legierungen ein silizium-freies Al₃Fe-Eutektikum. Silizium sei in der Al-Phase zu finden und es bilde sich keine AlFeSi-Phase aus. Diese Zusammenhänge konnten in den vorliegenden Untersuchungen bestätigt werden. Es ist daher darauf zu achten den Silizium-Gehalt ausreichend gering, d.h. in etwa bei 0,2 Gew. % zu halten, da sich ansonsten eine AlFeSi-Phase ausbildet und mit einer Versprödung des Werkstoffs zu rechnen ist. Ferner führt ein falsch, sprich zu hoch eingestellter Silizium-Gehalt zu einer Schlammbildung im Warmhalteofen und daher zu Problemen bei der Herstellung der Legierung. Aufgrund von Verunreinigungen, ist im begrenzten Umfang das Auftreten einer derartigen Phase grundsätzlich möglich, wenngleich Mg₂Si als stabile Phase Silizium bindet.

Die erfindungsgemäße Legierung ist grundsätzlich vielseitig einsetzbar, zielt aber auf eine Anwendung bei Strukturbauteilen im Automobilbau ab. Die Anforderungen an crashrelevante Strukturbauteile können damit bereits im Gusszustand erreicht werden. Sie unterscheidet sich in einer Reihe von Punkten deutlich von den bislang eingesetzten Legierungen. Vorteilhaft ist die hohe Zeit- und Wärmestabilität der erfindungsgemäßen Legierung. Es konnten Wärmebehandlungen von bis zu einer Stunde (1h) bei 400 °C angewandt werden, ohne dass eine signifikante Wirkung auf die im Zustand F erreichten Werkstoffkennwerte eintritt. Erst ab einer Temperatur von 500°C konnten erste Abweichungen festgestellt werden. Bekannte Legierungen des Typs AlSi10MnMg oder AlMg5Si2Mn verändern ihre Kennwerte nach einer Wärmebeanspruchung 1 h bei 400 °C in der Regel erheblich.

Ferner zeichnet sich die erfindungsgemäße Legierung durch eine gute Nietfähigkeit im Gusszustand aus, die ebenfalls von keiner bislang auf dem Markt befindlichen Legierung erreicht wird.

Es konnte festgestellt werden, dass eine Legierungszusammensetzung mit niedrigem Magnesium-Gehalt, kleiner 0,5 Gew. % Magnesium eine hohe elektrische Leitfähigkeit von grösser 25 m/(Ω mm²) [Meter pro Ohm Quadratmillimeter] aufweist. Diese Werte konnten mit einer Wärmebehandlung noch weiter gesteigert werden.

### Zusatzelemente sind möglich.

Mangan trägt in Grenzen zur Festigkeitssteigerung bei und kann spröde AlFeSi-Betaphasen in weniger nachteilige AlMn-FeSi-Alphaphasen umformen. Beryllium verringert die Oxidationsneigung der Schmelze. Beim Giessen von dickwandigen Bauteilen kommen vorwiegend Titan-Bor Kornfeiner zum Einsatz. In eine Ausführungsvariante der erfindungsgemässen Legierung wird Kupfer und/oder Zink beigegeben, was die Festigkeit der Legierung deutlich beeinflusst. Es tritt Härtung auf, der Werkstoff reagiert durch die Beigabe von Kupfer und/oder Zink auf Wärmebehandlungen. Die Zeitfestigkeit und Temperaturbeständigkeit ist beeinflusst. Kupfer und/oder Zink Elemente sollten nur gewählt werden, wenn eine Dehngrenze von 150 MPa oder darüber gefordert wird. Bei hohen Zinkanteilen können Dehngrenzen von über 400 MPa nach T6-Wärmebehandlung erreicht werden.

Ein Salzsprühnebel-Wechseltest (ISO 9227) und ein interkristalliner Korrosionstest (ASTM G110-92) dienten zur Überprüfung der Korrosionsneigung. Die Zusammensetzung der erfindungsgemäßen Legierung ist so gewählt, dass eine gute Korrosionsbeständigkeit im Falle der Kupfer- und Zink-freien Variante erreicht werden konnte. Kupfer und Zink können die Korrosionsbeständigkeit senken.

### Vergleichsbeispiele

Im Folgenden sind die Zusammensetzungen von 2 Ausführungsbeispielen (Legierungsvarianten C und D) der erfindungsgemässen Legierung gegenübergestellt. Die Angaben verstehen sich in Gew.-%. Anhand dieser vier Legierungen wurden die mechanischen Kennwerte (Rₘ, R_{p0.2}, A₅ und Biegewinkel) an druckgegossenen 3 mm-Platten gemessen. Dargestellt ist jeweils der Mittelwert aus 8 Zugprüfungen.

| | **Mg** | **Fe** | **Si** | **Mn** | **Cu** | **Zn** |
|---|---|---|---|---|---|---|
| Variante A | 0,01 | 2,01 | 0,03 | 0,01 | 0,003 | 0,01 |
| Variante B | 0,48 | 2,10 | 0,04 | 0,01 | 0,003 | 0,01 |
| Variante C | 3,94 | 1,63 | 0,04 | 0,01 | 0,003 | 0,01 |
| Variante D | 6,01 | 1,56 | 0,04 | 0,33 | 0,003 | 0,01 |

| | **Ti** | **B** | **Sr** | **P** | **Be** | |
|---|---|---|---|---|---|---|
| Variante A | 0,006 | 0,000 | 0,000 | 0,0005 | 0,000 | |
| Variante B | 0,006 | 0,000 | 0,000 | 0,0006 | 0,000 | |
| Variante C | 0,002 | 0,000 | 0,000 | 0,0008 | 0,004 | |
| Variante D | 0,006 | 0,004 | 0,030 | 0,0006 | 0,003 | |

### Erzielte Resultate

### Zustand F (Gusszustand)

| | **Rm [N/mm²]** | **Rp_{0,2} [N/mm²]** | **A5 [%]** | **Biegewinkel [°]** |
|---|---|---|---|---|
| Variante A | 147 | 73 | 20,2 | 91 |
| Variante B | 169 | 82 | 15,3 | 68 |
| Variante C | 248 | 120 | 14,9 | 60 |
| Variante D | 285 | 150 | 9,3 | 45 |

Der Biegewinkel wurde nach Daimler-Vorschrift DBL 4918 bestimmt und ist ein Maß für die Nietfähigkeit eines Werkstoffs.

Die Legierungsvariante B erreichte eine elektrische Leitfähigkeit von 26,1 m/(Ω mm²) im Gusszustand. Nach einer Wärmebehandlung von 1 h bei 500 °C konnten 29,2 m/(Ω mm²) gemessen werden.

## Patentansprüche

1. Gusslegierung bestehend aus:
| | |
|---|---|
| Eisen | 0,8-3,0 Gew. % |
| Magnesium | 2,0 bis 7,0 % |
| Mangan | 0 - 2,5 Gew. % |
| Beryllium | 0 - 500 ppm |
| Titan | 0- 0,5 Gew. % |
| Silizium | 0-0,4 Gew.% |
| Strontium | 0-0,8 Gew. % |
| Phosphor | 0- 500 ppm |
| Kupfer | 0- 4 Gew. % |
| Zink | 0- 10 Gew. % |
0- 0,5 Gew. % eines Elements oder einer Elementengruppe ausgewählt aus der Gruppe bestehend aus Chrom, Nickel, Molybdän, Zirkon, Vanadium, Hafnium, Calcium, Gallium und Bor,
und der Rest Aluminium und unvermeidbare Verunreinigungen.

2. Gusslegierung nach einem der vorangegangenen Ansprüche, **gekennzeichnet durch** 1,0 - 2,4 Gew.-% Eisen.

3. Gusslegierung nach einem der vorangegangenen Ansprüche, **gekennzeichnet durch** 1,4 - 2,2 Gew.-% Eisen.

4. Gusslegierung nach einem der vorangegangenen Ansprüche, **gekennzeichnet durch** 3,0 - 5,0 Gew.-% Magnesium.

5. Gusslegierung nach einem der vorangegangenen Ansprüche, **gekennzeichnet durch** 0- 0,6 Gew.-% Mangan.

6. Gusslegierung nach einem der vorangegangenen Ansprüche, **gekennzeichnet durch** 0- 100 ppm Beryllium.

7. Gusslegierung nach einem der vorangegangenen Ansprüche, **gekennzeichnet durch** 0- 0,03 Gew.-% Strontium.

8. Gusslegierung nach einem der vorangegangenen Ansprüche, **gekennzeichnet durch** 0- 0,5 Gew.-% Zink.

9. Gusslegierung nach einem der vorangegangenen Ansprüche, **gekennzeichnet durch** 0- 50 ppm Phosphor.

10. Gusslegierung nach einem der vorangegangenen Ansprüche, **gekennzeichnet durch** 0-0,2 Gew. Kupfer.

11. Verwendung einer Gusslegierung nach einem der vorangegangenen Ansprüche zum Druckgiessen, vorzugsweise zum Druckgiessen von Strukturbauteilen für den Automobilbau.

12. Druckgegossenes, crashrelevantes Strukturbauteil für den Automobilbau, hergestellt aus einer Gusslegierung gemäss einem der vorangegangenen Ansprüche 1 bis 11.

## Claims

1. A cast alloy, consisting of:
iron 0.8-3.0% by weight
magnesium 2.0 to 7.0%
manganese 0-2.5% by weight
beryllium 0-500 ppm
titanium 0-0.5% by weight
silicon 0-0.4% by weight
strontium 0-0.8% by weight
phosphorus 0-500 ppm
copper 0-4% by weight
zinc 0-10% by weight
0-0.5% by weight of an element or a group of elements selected from the group consisting of chromium, nickel, molybdenum, zirconium, vanadium, hafnium, calcium, gallium and boron, with the remainder being aluminum and unavoidable impurities.

2. The cast alloy according to any one of the preceding claims,
**characterized by** 1.0-2.4% by weight iron.

3. The cast alloy according to any one of the preceding claims,
**characterized by** 1.4-2.2% by weight iron.

4. The cast alloy according to any one of the preceding claims,
**characterized by** 3.0-5.0% by weight magnesium.

5. The cast alloy according to any one of the preceding claims,
**characterized by** 0-0.6% by weight manganese.

6. The cast alloy according to any one of the preceding claims,
**characterized by** 0-100 ppm beryllium.

7. The cast alloy according to any one of the preceding claims,
**characterized by** 0-0.03% by weight strontium.

8. The cast alloy according to any one of the preceding claims,
**characterized by** 0-0.5% by weight zinc.

9. The cast alloy according to any one of the preceding claims,
**characterized by** 0-50 ppm phosphorus.

10. The cast alloy according to any one of the preceding claims,
**characterized by** 0-0.2% by weight copper.

11. Use of a cast alloy according to any one of the preceding claims for die-casting, preferably for die-casting structural components for automotive engineering.

12. A die-cast, crash-relevant structural component for automotive engineering, manufactured from a cast alloy according to any one of the preceding claims 1 to 11.

## Revendications

1. Alliage destiné au moulage, composé de
Fer de 0,8 à 3,0 % en poids
Magnésium de 2,0 à 7,0 % en poids
Manganèse de 0 à 2,5 % en poids
Béryllium de 0 à 500 ppm
Titane de 0 à 0,5 % en poids
Silicium de 0 à 0,4 % en poids
Strontium de 0 à 0,8 % en poids
Phosphore de 0 à 500 ppm
Cuivre de 0 à 4 % en poids
Zinc de 0 à 10 % en poids
de 0 à 0,5 % en poids d'un élément ou d'un groupe d'éléments, choisi dans le groupe composé du chrome, du nickel, du molybdène, du zirconium, du vanadium, de l'hafnium, du calcium, du gallium et du bore, le reste étant de l'aluminium et des impuretés inévitables.

2. Alliage destiné au moulage selon l'une quelconque des revendications précédentes, **caractérisé par** de 1,0 à 2,4 % en poids de fer.

3. Alliage destiné au moulage selon l'une quelconque des revendications précédentes, **caractérisé par** de 1,4 à 2,2 % en poids.

4. Alliage destiné au moulage selon l'une quelconque des revendications précédentes, **caractérisé par** de 3,0 à 5,0 % de magnésium.

5. Alliage destiné au moulage selon l'une quelconque des revendications précédentes, **caractérisé par** de 0 à 0,6 % en poids de manganèse ;

6. Alliage destiné au moulage selon l'une quelconque des revendications précédentes, **caractérisé par** de 0 à 100 ppm de béryllium.

7. Alliage destiné au moulage selon l'une quelconque des revendications précédentes, **caractérisé par** de 0 à 0,03 % en poids de strontium.

8. Alliage destiné au moulage selon l'une quelconque des revendications précédentes, **caractérisé par** de 0 à 0,5 % en poids de zinc.

9. Alliage destiné au moulage selon l'une quelconque des revendications précédentes, **caractérisé par** de 0 à 50 ppm de phosphore.

10. Alliage destiné au moulage selon l'une quelconque des revendications précédentes, **caractérisé par** de 0 à 0,2 % en poids de cuivre.

11. Utilisation d'un alliage destiné au moulage selon l'une quelconque des revendications précédentes pour le moulage sous pression, de préférence pour le moulage sous pression de pièces de structure dans la construction automobile.

12. Pièce de structure moulée sous pression, significative en matière de crash dans la construction automobile, fabriquée en un alliage destiné au moulage selon l'une quelconque des revendications 1 à 11.
